# EUROPEAN PATENT SPECIFICATION

(11) **EP 1 150 876 B1**
(45) Date of publication and mention of the grant of the patent: **02.01.2003**
(21) Application number: 00919097.6
(22) Date of filing: 11.02.2000
(51) Int. Cl.: B62D 7/22

(54) **A VEHICLE STEERING SYSTEM**
FAHRZEUGLENKSYSTEM
SYSTEME DE DIRECTION D'UN VEHICULE

(30) Priority: 17.02.1999 AU PP872899
(43) Date of publication of application: 07.11.2001
(73) Proprietor: Liebherr-America, Inc., Newport News, VA 23607 (US)
(72) Inventor: DICKERSON, Alan, William, Mount Eliza, VIC 3930 (AU)
(74) Representative: Gossel, Hans K., Dipl.-Ing.
(86) International application number: IB0000548
(87) International publication number: WO00048894

(56) References cited:
- US-A- 3 782 491
- US-A- 3 786 889
- PATENT ABSTRACTS OF JAPAN vol. 010, no. 218 (M-503), 30 July 1986 (1986-07-30) -& JP 61 057464 A (NISSAN MOTOR CO LTD), 24 March 1986 (1986-03-24)

## Description

The present invention relates to a vehicle steering system.

The present invention relates particularly, although by no means exclusively, to a steering system for trucks and other large vehicles.

The present invention relates more particularly to a steering system for large and very large trucks of the type used in mining operations.

Large and very large mining trucks are a special class of vehicle in many respects. Besides being able to carry very large and very heavy loads on a small number of tyres (for example payloads of more than 300 tonnes on only six tyres), they can do this on very uneven surfaces. They are also able to travel at speeds in excess of 60km/h on suitable surfaces. They are generally produced in relatively small quantities, but they are not "one off" vehicles. Production rates for any particular model range from just a few per year to about 100 units per year.

The suspension and steering systems for these vehicles have developed along relatively unique lines because of a number of factors, including the size of the vehicles, the size of the front steering wheels (up to about 4 meters in diameter), the harshness of the working environments, and the very high forces in the components of the suspension and steering systems.

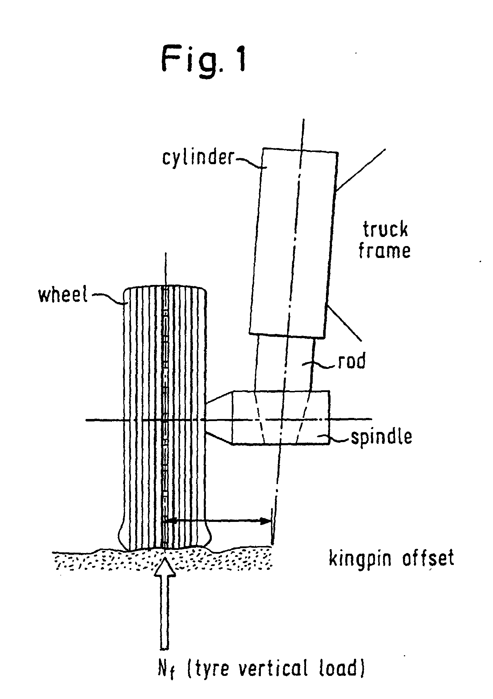

Most large and very large mining trucks employ independent front wheel suspension systems and the most common system is a "sliding pillar" (alternatively referred to as a "sliding king-pin") type of front suspension that is not widely used outside the mining truck industry. Figure 1 shows the general arrangement of this type of front wheel suspension system. A front wheel spindle is attached to the lower end of a vertical or near vertical rod (king-pin) which slides in a cylindrical housing to provide the suspension compliance effect. The rod is also free to rotate in the cylindrical housing to turn the front wheel and provide a steering effect for the vehicle.

in most front wheel suspensions of this type, the rod is a piston which operates in an hydraulic cylinder and the suspension compliance (spring effect) is provided by a volume of gas (generally nitrogen) acting on the top of the oil in the hydraulic cylinder. In some others, the spring effect is provided by a set of elastomeric pads acting on the top of the sliding rod (king-pin). The rod and its mating cylindrical housing are often inclined at a small angle (typically about 3.5 degrees) from vertical. This reduces the wheel offset relative to the centre-line of the rod (generally referred to as the king-pin offset) and has the desirable result of reducing side load induced friction between the rod and the cylindrical housing. This is necessary to minimise "friction locking" of the front wheel suspension system.

With this type of front wheel suspension system, the steering arm is attached to the spindle which in turn is attached to the base of the rod (king-pin).

Primarily because of their size and the magnitude of the forces involved, steering systems for this type of vehicle are fully power-operated rather than power-assisted as is the case for on-highway vehicles. The driver's steering wheel operates an hydraulic valve system that regulates the flow of pressurised oil into and out of hydraulic steering cylinders that are mechanically connected to the front wheels. There is no direct mechanical connection between the driver's wheel and the road wheels. Generally, two double acting and interconnected hydraulic cylinders are used to steer the front wheels as described in JP 61 57 464, which was used to draft the preamble of claim 1. Typically these cylinders have a piston of about 140mm diameter. The two front wheels are connected by a linkage system that endeavours to provide a good approximation to the "Ackerman" relationship between the turn angle of the inside front wheel and the outside front wheel as well as minimising changes in front wheel alignment (toe-in or toe-out) as the front wheels move through their range of suspension (vertical) travel.

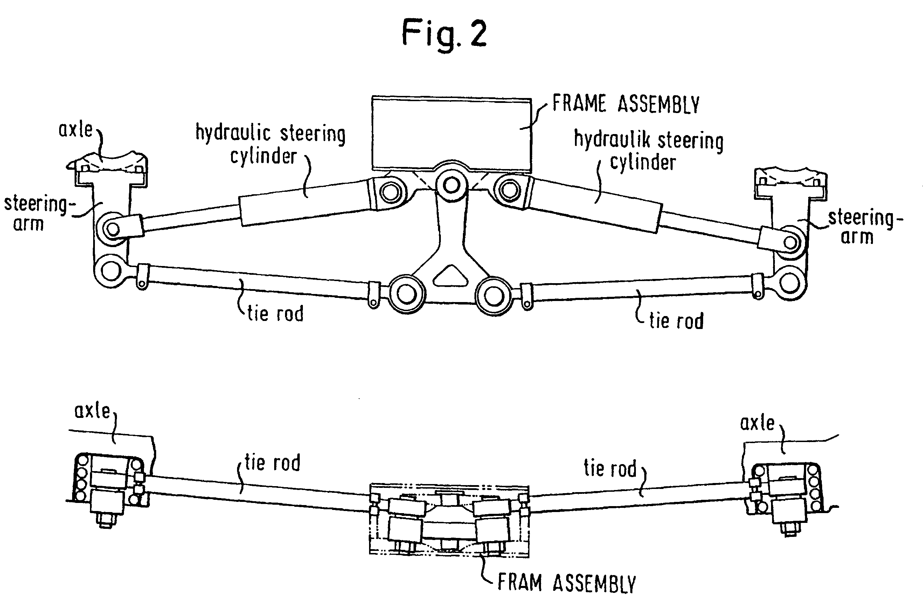

Figure 2 shows a typical arrangement of hydraulic cylinders and linkages for a large mining truck with independent sliding pillar type front wheel suspension systems. The central idler arm of this steering system provides the "Ackerman" steering geometry between the inside and the outside front wheels during turning manoeuvres and it minimises the change of front wheel alignment as the front wheels and their steering arms move up and down, parallel to the inclined centre-line of the suspension cylinder.

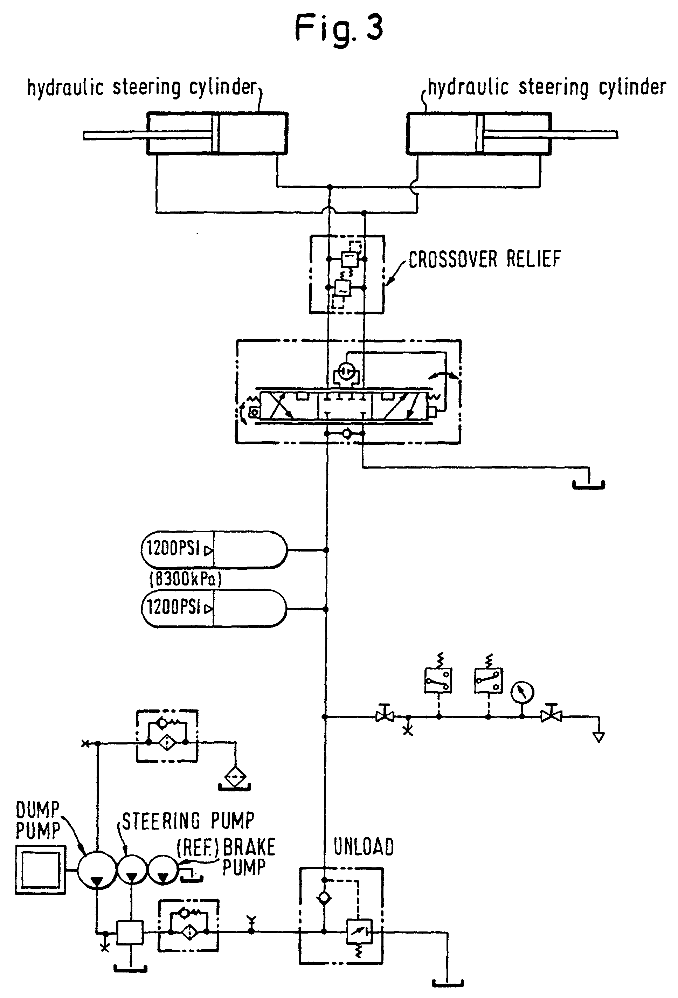

Figure 3 shows a typical schematic arrangement for the hydraulics part of a steering system of the type shown in Figure 2. The inter-connection between the two steering cylinders is used to increase the effective area of the cylinders and thereby minimise the cylinder diameters. Keeping the cylinder diameter as small as possible is important because of space constraints. It also helps to reduce costs and weight.

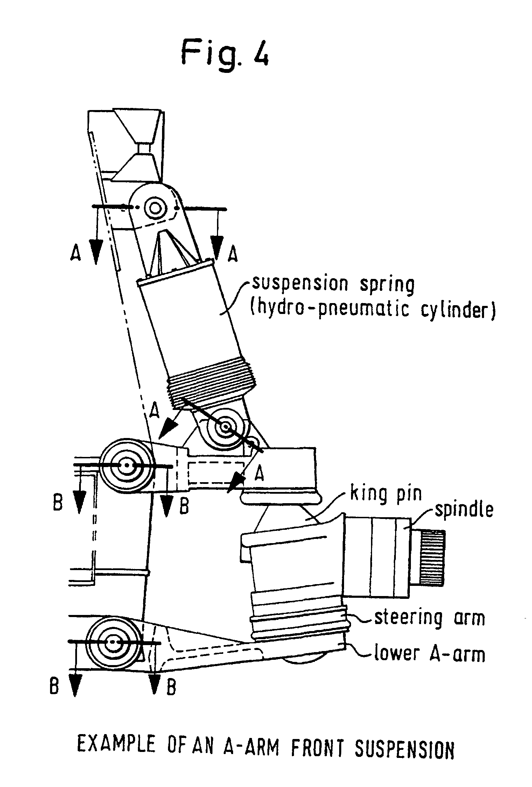

Some large mining trucks use an A-arm front wheel suspension system which also provides fully independent suspension for the two front wheels. In these suspensions, the lower end of the king-pin is retained by an A-arm which pivots about a longitudinal axis on the main frame (chassis) of the truck. At least two different arrangements for locating the top end of the king-pin and attaching the suspension spring unit are used in the industry. With these suspension systems, the steering arm is attached to the king-pin or the wheel spindle at a height just above the swivelling joint between the A-arm and the lower end of the king-pin. A typical arrangement of an A-arm front wheel suspension system is shown in Figure 4.

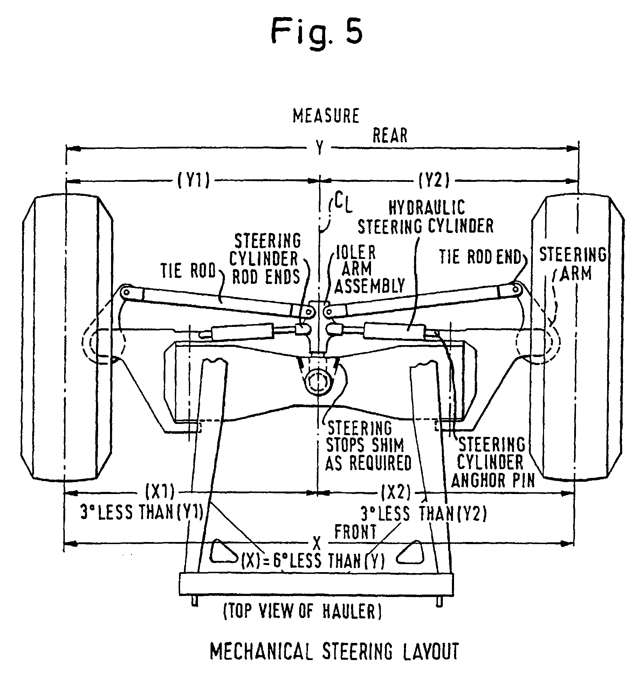

A typical arrangement of hydraulic cylinders and linkages for a large mining truck with an independent A-arm type front suspension is shown in Figure 5. In this arrangement, the connection points for the "tie rods" on the central idler arm are much closer together than for the system shown in Figure 2, and most of the "Ackerman" geometry effect is obtained by the angling of the steering arms compared to the centre-line of the tyres. Without turning of the vehicle steering (front) wheels, vertical travel of the suspension and the steering arm will cause the connection point on the steering arm to traverse a different trajectory to that for the outer end of the tie rod which is pivoting about the connection to the idler arm at its inner end. The inflexibility of the tie rod causes the connection point on the steering arm to follow the trajectory of the outer end of the tie rod and this causes a small turning of the vehicle's front (steering) wheel without any steering input. This causes a small change of relative alignment (toe-in or toe-out) between the front (steering) wheels. The degree of alignment change depends on several geometry factors. In some cases the change of front wheel alignment over the full range of suspension travel can be relatively small, but in some large mining trucks it is known to be relatively large. Suspension travel induced alignment changes of more than 150mm (measured in the conventional way as the difference in track width between the front of the tyres and the rear of the tyres) are known to occur for some large mining trucks.

The steering systems shown in Figures 2 and 5 suffer from the following problems.

They require eight ball joint type connections on the ends of the tie rods, hydraulic cylinder rods and the hydraulic cylinder housings. One double bearing system is also required to support the central idler arm - ten bearings in all. Generally, each of these ten bearings has to be separately greased and each is a limited life component. On vehicles of this type, greasing is often done automatically, but each bearing requires a separate grease line from the central greasing system. Each grease line adds to the multitude of cables, pipes and hoses in this area of the vehicle and each grease line is a source of failure. Every greased bearing adds to the amount of grease build up on the truck which in turn creates difficulties for maintenance personnel. It also eventually ends up contaminating the environment somewhere.

The idler arms are heavy and expensive. The weight of a typical idler arm (without bearings, support structure, etc) is approximately 200kg. The mounting system for the idler arm and the associated bearing systems also incurs additional cost and weight. When required, the replacement of the bearing systems on which the idler arms pivot can be a difficult and time consuming task.

The two double acting hydraulic cylinders require interconnecting hydraulic hoses and additional hose connections. There are two hoses passing from one side to the other and a total of six pressure hose connections in the area. Each of these connections is a potential source of oil leakage and possible steering failure during the operating life of the truck.

The system is complex and space consuming. Even though these vehicles are large, the steering system has to be in a space directly under the engine where general access to the engine etc is important. Current systems cause significant loss of access to the underside of the engine and access for maintenance work on some steering system components is also restricted to less than is desirable.

Particularly as applied to A-arm front suspension systems, the steering systems can cause significant change of front wheel alignment as the suspension operating height changes. Toe-in changes (measured at the tyre diameter) of at least 150mm are known to occur. This situation arises because the complexity and space requirements of the current steering systems limit where they can be placed relative to the front wheel and suspension systems.

An object of the present invention is to provide a large vehicle having a steering system which is applicable to both "sliding pillar" and A-arm suspensions and which is not subject to the disadvantages described in the preceding paragraphs.

According to the present invention there is provided a large vehicle, such as a large mining truck and a very large mining truck, which vehicle includes: a main frame; a pair of front wheel assemblies; an independent suspension system which couples each wheel assembly to the main frame; and a steering system for the wheel assemblies, which steering system includes:
(a) a double-ended hydraulic cylinder mounted to the main frame;
(b) a piston rod mounted for sliding movement in the cylinder;
(c) a pair of tie rods, each tie rod being coupled at an inner end to the piston rod and at an outer end to one of the wheel assemblies so as to provide differential turning (steering) movement of the wheel assemblies as the piston rod is moved in the cylinder; and
the location of the coupling between the inner end of each tie rod and the piston rod being at a position that does not cause large changes of wheel alignment as the wheels move through their range of heights relative to the main frame of the truck.

The above broad statement of the invention describes in functional terms the important requirement of the steering system of the vehicle of the present invention that it accommodate relative vertical movement of the wheel assemblies and the piston rod/cylinder, which may be up to 300mm or more for very large trucks, in response to operation of the suspension system.

It is preferred that the inner ends of the tie rods be connected to the piston rod for swivelling movement relative to the piston rod in order to accommodate relative vertical movement of the wheel assemblies and the piston rod/cylinder.

More particularly, it is preferred that the piston rod includes a hollow section, typically in the form of a cylindrical bore, that extends into the piston rod from each end and that the inner ends of the tie rods be located in the hollow sections.

The above-described recesses in the piston rod are an important feature for at least vehicles having "sliding pillar" independent suspension systems because it makes it possible for the length of the tie rods to be similar to those on the current steering systems operating with this type of independent suspension system and thereby minimises front wheel toe-in and toe-out changes with changes in suspension height.

It is preferred that the ratio of the diameter of the piston rod to the diameter of the cylinder bore be at least 0.5:1, more preferably at least 0.6:1. This feature is important because it makes it possible to have a substantial bearing area between the cylinder and the piston rod and this improves transfer of side loads which are generated when the tie rods are at a significant angle without excessive wear rates in the bearings or the tie rods. It also means that the diameter of the piston rod is relatively large and this allows the inner end of the tie rods to be recessed into the piston rods as described above.

It is preferred that each tie rod be connected to the piston rod by a swivel joint.

It is preferred that each tie rod be connected to the wheel assemblies by a swivel joint.

It is preferred that each swivel joint be a spherical ball joint.

The present invention is described further by way of example with reference to the accompanying drawings, of which:
Figures 6a and 6b are a top plan view and a rear elevation respectively illustrating the general arrangement of a steering system for a "sliding pillar" type front suspension of one embodiment of a vehicle of the present invention;
Figure 7 is a detailed top plan view of the steering system shown in Figures 6a and 6b;
Figures 8a, 8b and 8c are top plan views and a rear elevation of the arrangement shown in Figures 6a and 6b which illustrate different steering positions and different relative positions of the suspension and the steering system;
Figure 9 is a hydraulic schematic view for the steering system shown in Figures 6 to 8;
Figure 10 is a top plan view illustrating the general arrangement of a steering system and an A-arm type front suspension of another embodiment of a vehicle of the present invention; and
Figure 11 is a detailed top plan view of the steering system shown in Figure 10.

The present invention replaces altogether the idler arm, its associated bearings, and the two double acting hydraulic cylinders that characterise the known steering systems for large vehicles with a steering system that is based on a single double-ended hydraulic cylinder piston rod and has features which make it suitable for large vehicles. Specifically, the piston rod forms a central section between the tie rods and acts directly on the tie rods and movement of the piston rod in the hydraulic cylinder moves the tie rods without any intermediate linkages.

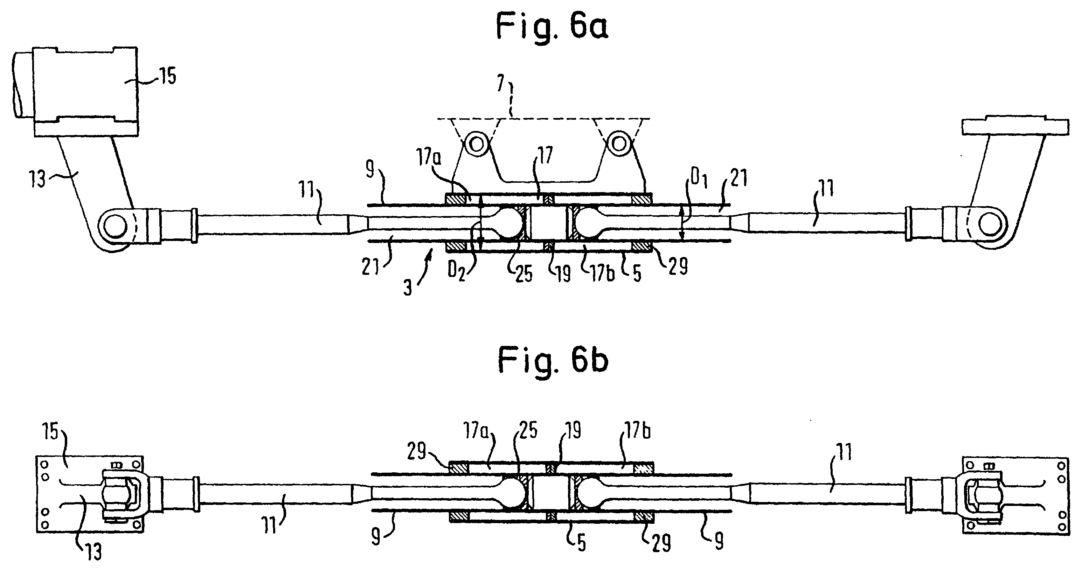

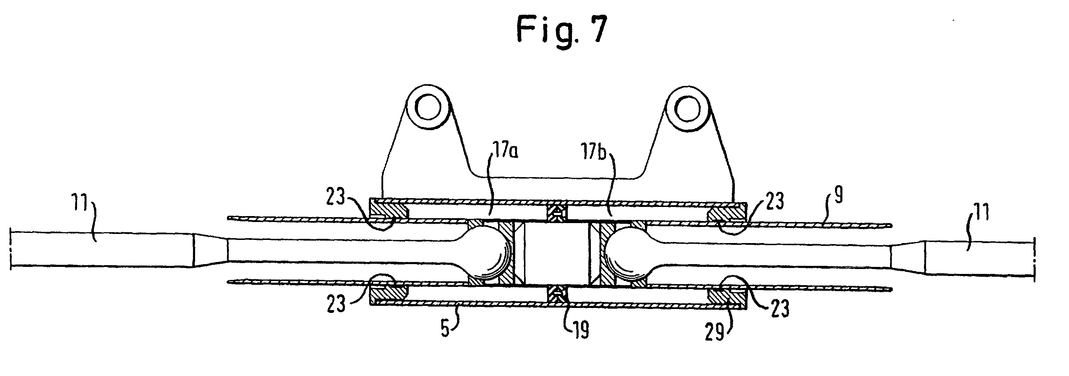

In the embodiment of the vehicle shown in Figures 6 to 9, the steering system, generally identified by the numeral 3, includes:
(a) a double-ended hydraulic cylinder 5 with end caps 29 that is mounted to a forward vehicle frame member 7;
(b) a piston rod 9 supported by bearings 23 in the end caps 29 (see Figure 7) for sliding movement in the cylinder 5; and
(c) a pair of tie rods 11 that are coupled at inner ends to the piston rod 9 and at outer ends to steering arms 13 that extend from spindles 15 of front wheel assemblies of the vehicle (not shown).

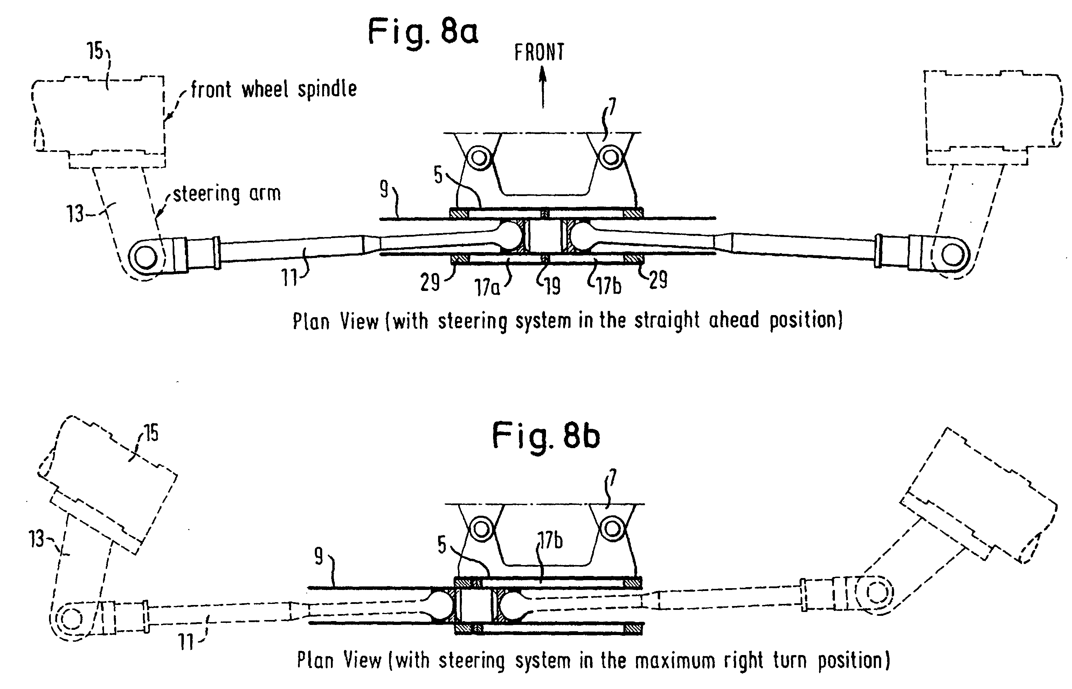

The diameter D₁ of the piston rod 9 is less than the diameter D₂ of the bore of the cylinder 5 and the resultant annular open ends of the cylinder 5 are sealed by the end caps 29. As a result the cylinder 5 and the piston rod 9 defines a closed annular chamber. An outer annular piston member 19 divides the chamber into two chambers 17a, 17b, whereby in use selective supply of hydraulic fluid to the chambers acts against the piston member 19 and moves the piston rod 9 to the left or the right. This movement is transferred via the tie rods 11 to the wheel assemblies and turns (steers) the wheel assemblies - as is shown by way of example in Figure 8b.

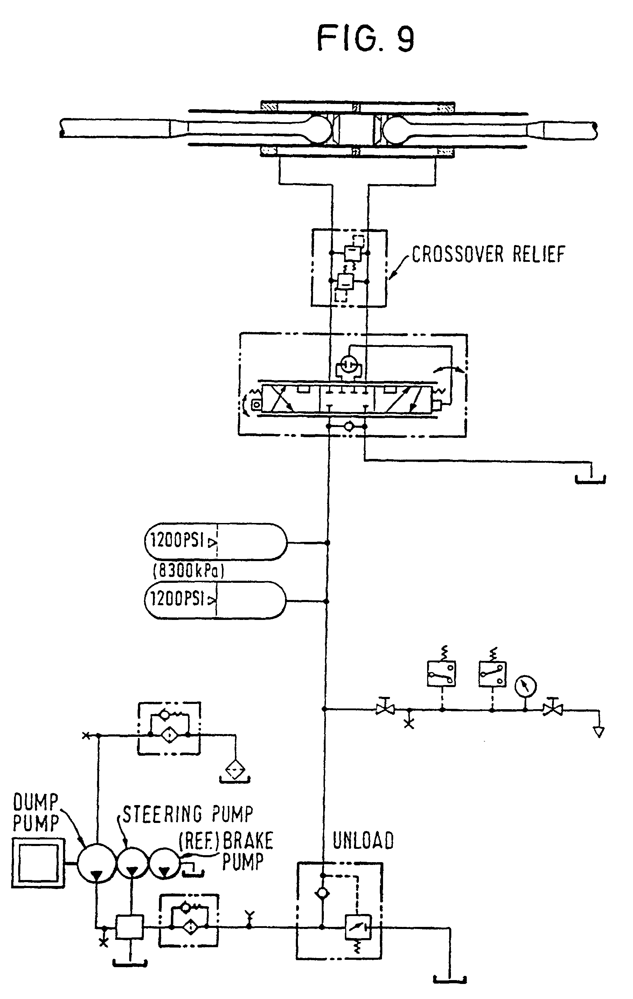

The hydraulic schematic in Figure 9 shows the number of hoses and hose connections required for the steering system. When this Figure is compared to the hydraulic schematic for the known steering system shown in Figure 3 it can be appreciated that the steering system requires considerably fewer hoses and hose connections.

The steering system is characterised by the ratio of the diameter D₁ of the piston rod 9 to the diameter D₂ of the cylinder bore being relatively large, preferably greater than 0.5. The relatively large piston rod diameter provides for a substantial bearing area between the piston rod 9 and the bearings 23. This allows the piston rod 9 to transfer the side loads which are generated when the tie rods 11 are at a significant angle to the piston rods 9 without excessive wear rates in the bearings or the piston rods 9.

In the above-described arrangement the cylinder 5 is fixed to the vehicle frame and the outer ends of the tie rods 11 are fixed to the wheel assemblies. In accordance with the present invention the inner ends of the tie rods 11 are coupled by swivel connections 25 to the piston rod 9 to accommodate relative movement between the vehicle frame and the connection points on the steering arms which are attached to the wheel assemblies that occurs as a consequence of the operation of the front suspension system of the vehicle and/or turning of the steering wheels.

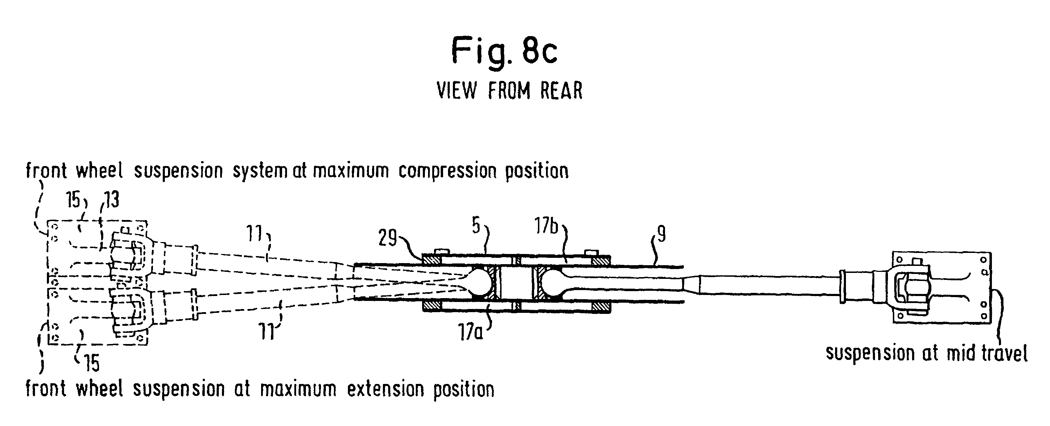

Moreover, the relatively large diameter D₁ of the piston rod 9 allows the swivel connections 25 to be recessed inside the piston rod 9. Specifically, the piston rod 9 includes hollow sections in the form of cylindrical bores 21 that extend from the ends of the piston rod 9, and the tie rods 11 are positioned in these bores and are connected to the piston rods 9 by the swivel connections 25 at the inner ends of the bores 21. The left hand side of Figure 8c illustrates the extent of possible vertical movement of the vehicle frame relative to the front wheel assemblies that can be accommodated by the recessed tie rods 11. Figures 8a and 8b illustrate the extent of horizontal movement of the steering arm connection points relative to the main frame and the consequent angulation of the tie rods 11 relative to the piston rod 9.

The feature of recessed tie rods 11 allows the length of the tie rods 11 to be similar to those for current steering systems operating with this type of suspension. This ensures that the change of wheel alignment as the suspension system travels through its working range is similar to that for current steering systems working with this type of suspension system. With appropriate height relationships between the cylinder 5 and the steering arms 13 on the front wheel spindles 15, the change of front wheel alignment between the loaded and empty truck positions of the suspension system can be kept small.

Without the geometry effect of the prior art central idler arm, the angle of the steering arms 13 on the front wheel spindles 15 must be changed in order to obtain the "Akkerman" steering geometry effect. Methods for establishing the optimum angle of the steering arms 13 are well established and widely used in the design of on-highway vehicles, as well as large mining trucks.

Approximate cylinder bore and piston rod sizes for the single steering cylinder applied to a typical large mining truck are 220mm and 150mm respectively. Whilst the cylinder diameter is about 80mm greater than for each of the two cylinders of an existing system, this does not present any significant problems and it is more than offset by the reduction in the number of components.

The swivelling joints 25 between the piston rod 9 and the tie rods 11 can be oil lubricated, with the oil being retained by a conventional rubber boot between the tie rods 11 and either the piston rod 9 or the cylinders. The number of bearings in the steering system that require grease lubrication is then reduced to only two.

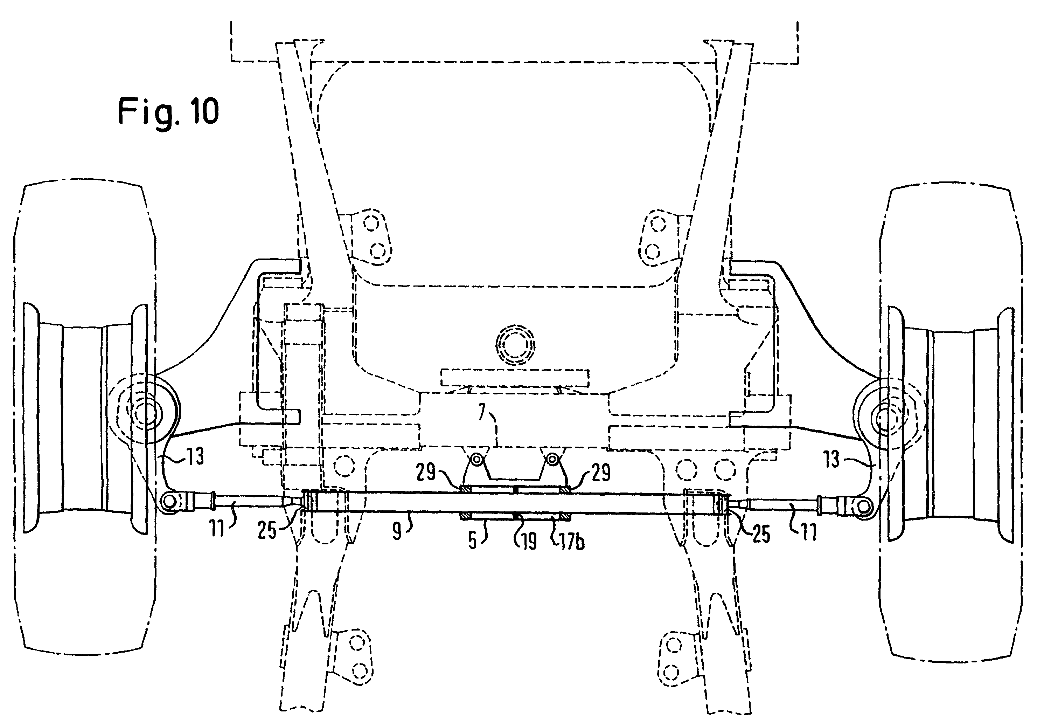

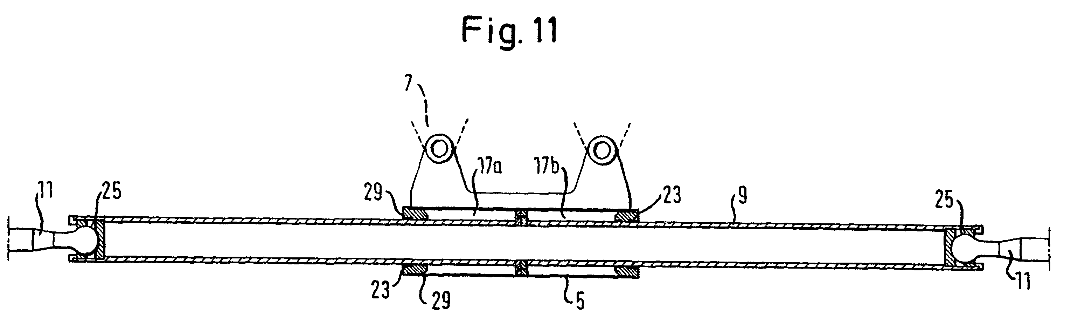

With reference to Figures 10 and 11, when applied to A-arm suspension systems, the piston rod 9 of the double ended hydraulic steering cylinder 5 shown in the Figures 6 to 9 embodiment is extended so that the swivel connections 25 with the tie rods 11 are close to being in line with the longitudinal pivoting axis for the A-arm of the suspension system (when the front wheels are in the straight ahead position). This minimises the change of front wheel alignment as the front wheels travel through the range of height changes allowed by the suspension system.

The swivelling connections 25 between the tie rods 11 and the piston rod 9 could be similar to the linkage connections in current technology mining truck steering systems. However, another option is to use ball ends on the tie rods 11 similar to that shown for the "sliding pillar" front suspension system embodiment. Using this type of swivel connection has advantages in that it can be permanently lubricated with oil, it makes adjustment of front wheel alignment easier, it eliminates the need to maintain any particular rotational alignment of the piston rod 9 and it has a wider range of articulation capabilities. As for the previously described embodiment, the number of swivelling connections requiring grease lubrication is reduced to two.

## Claims

1. Vehicle steering system (3) for the wheel assemblies (13, 15), comprising
a) a double-ended hydraulic cylinder (5) mounted to the main frame (7);
b) a piston rod mounted for sliding movement in the cylinder (5) by end bearings (23);
c) a pair of tie rods (11), each tie rod being swivel coupled (25) at an inner end to the piston rod (9) and at an outer end to one of the wheel assemblies (13, 15) so as to provide differential turning (steering) movement of the wheel assemblies (13, 15) as the piston rod (9) is moved in the cylinder (5)
**characterized by** the piston rod (9) including long hollow end sections in the form of cylindrical bores (21) that extend inwardly from the ends of piston rod (9) and the coupling (25) between the inner ends of the tie rods (11) and the piston rod (9) being located at the inner ends of the cylindrical bores (21) to enable the length of the tie rods (11) to be similar to the length of tie rods in existing steering systems to minimize changes in front wheel toe-in and toe-out during changes in suspension height.

2. Vehicle steering system according to claim 1, wherein the ratio of the diameter of the piston rod (9) to the diameter of the cylinder bores (21) is at least 0.5:1, more preferably at least 0.6:1 to provide a substantial bearing area between the cylinder (5) and the bearing (23) at the ends of the cylinder5 (5) thereby improving transfer of side loads generated when the tie rods (11) are at a significant angle with respect tot he piston rod (9) without excessive wear rates in bearings (23).

## Patentansprüche

1. Fahrzeuglenksystem (3) für die Radeinheiten (13, 15), welches System umfaßt:
a) einen auf dem Hauptrahmen (7) montierten doppelt wirkenden Hydraulikzylinder (5);
b) eine für gleitende Bewegung im Zylinder (5) durch Endlager (23) montierte Kolbenstange;
c) ein Paar Spurstangen (11), wobei jede Spurstange an einem inneren Ende der Kolbenstange (9) und mit einem äußeren Ende mit einer der Radeinheiten (13, 15) in der Weise gelenkig verbunden (25) ist, daß ein Differentialdrehung (eine Lenkbewegung) der Radeinheiten (13, 15) in dem Maße entsteht, wie die Kolbenstange (9) im Zylinder (5) bewegt wird, **dadurch gekennzeichnet, daß** die Kolbenstange (9) lange hohle Endabschnitte in Form zylindrischer Bohrungen (21) aufweist, die sich ausgehend von den Enden der Kolbenstange (9) nach innen erstrecken, und dadurch, daß die Kupplung (25) zwischen den inneren Ende der Spurstangen (11) und der Kolbenstange (9) an den inneren Enden der zylindrischen Bohrung (21) angeordnet ist, um zu ermöglichen, daß die Länge der Spurstangen (11) der Länge von Spurstangen an sich bekannter Lenksysteme ähnlich ist, um Veränderungen der Vorspur und der Nachspur während der Veränderungen der Höhe der Radaufhängung zu minimieren.

2. Fahrzeuglenksystem nach Anspruch 1, **dadurch gekennzeichnet, daß** das Verhältnis des Durchmessers der Kolbenstange (9) zum Durchmesser der zylindrischen Bohrungen (21) mindestens 0,5:1, weiter vorzugsweise mindestens 0,6:1 beträgt, um eine ausreichend große Tragfläche zwischen dem Zylinder (5) und dem Endlager (23) an den Enden des Zylinders (5) zu schaffen, wodurch die Übertragung von seitlichen Belastungen verbessert wird, die erzeugt werden, wenn sich die Spurstangen (11) in einer signifikanten Winkelstellung bezüglich der Kolbenstange (9) befinden, ohne daß bei den Endlagern (23) übermäßig schnelle Abnutzung entsteht.

## Revendications

1. Système de direction de véhicule (3) pour les ensembles de roues (13, 15), comportant
a) un cylindre hydraulique à double effet (5) monté sur le cadre principal (7) ;
b) une tige de piston montée pour un mouvement glissant dans le cylindre (5) par des paliers d'extrémité (23) ;
c) une paire de barres de raccordement (11), chaque barre de raccordement étant raccordée par une rotule (25) à une extrémité intérieure de la tige de piston (9) et à une extrémité extérieure à un des ensembles de roues (13, 15) de manière à assurer un mouvement de rotation (direction) différentiel des ensembles de roues (13, 15) au fur et à mesure que la tige de piston (9) est déplacée dans le cylindre (5),
**caractérisé en ce que** la tige de piston (9) comporte des longues sections d'extrémité creuses dans la forme d'alésages cylindriques (21) qui s'étendent vers l'intérieur à partir des extrémités de la tige de piston (9) et le couplage (25) entre les extrémités intérieures de la barre de raccordement (11) et la tige de piston (9) et que la tige de piston (9) est logée aux extrémités intérieures des alésages cylindriques (21) pour permettre à la longueur des barres de raccordement (11) d'être semblable à la longueur des tiges de raccordement de systèmes de direction existants afin de minimiser des changements de pincement et de bâillement des roues avant pendant les changements de la hauteur de suspension.

2. Système de direction de véhicule selon la revendication 1, dans lequel le ratio entre le diamètre de la tige de piston (9) et le diamètre des alésages cylindriques (21) est au moins de 0,5:1, de préférence au moins de 0,6:1 afin de fournir une zone d'appui substantielle entre le cylindre (5) et le palier (23) aux extrémités de cylindre, (5) améliorant de la sorte le transfert de charge latérale générée lorsque les barres de raccordement (11) sont à un angle significatif par rapport à la tige de piston (9) sans qu'un taux d'usure excessif dans les paliers (23) ne se produise.
